# EUROPÄISCHE PATENTSCHRIFT

(11) **EP 2 315 942 B1**
(45) Veröffentlichungstag und Bekanntmachung des Hinweises auf die Patenterteilung: **01.02.2012**
(21) Anmeldenummer: 09781229.1
(22) Anmeldetag: 29.07.2009
(51) Int. Cl.: F03D 11/00

(54) **WINDKRAFTANLAGENGETRIEBE**
WIND POWER PLANT TRANSMISSION
ENGRENAGE D'EQUIPEMENT A ENERGIE EOLIENNE

(30) Priorität: 29.08.2008 DE 102008044900
(43) Veröffentlichungstag der Anmeldung: 04.05.2011
(73) Patentinhaber: Winergy AG, 46562 Voerde (DE)
(72) Erfinder: DAMMER, Horst, 46487 Wesel (DE); SEMELKA, Marc, 46459Rees (DE); VRIESEN, Johannes, 46399 Bocholt (DE)
(74) Vertreter: Maier, Daniel Oliver
(86) Internationale Anmeldenummer: PCT/EP2009/059796
(87) Internationale Veröffentlichungsnummer: WO 2010/023055

(56) Entgegenhaltungen:
- EP-A2- 1 167 755
- DE-A1- 3 150 797
- DE-A1- 10 334 448
- GB-A- 555 439
- US-A- 4 507 926
- US-A1- 2006 230 761

## Beschreibung

Die vorliegende Erfindung betrifft ein Windkraftanlagengetriebe entsprechend dem Oberbegriff des Anspruchs 1. Ein solches Windkraftanlagengetriebe ist aus DE 103 34 448 A1 bekannt.

Zur Wartung bzw. Inspektion einer Windkraftanlage ist vielfach erforderlich, einen Getriebe und Generator umfassenden Antriebsstrang der Windkraftanlage rotierend zu bewegen. Bei größeren Windkraftanlagen ist ein Rotieren des Antriebsstrangs durch Muskelkraft insbesondere aufgrund hoher Trägheitsmomente durch große Rotordurchmesser üblicherweise nicht mehr möglich. Entsprechend bisherigen Lösungen wird hierzu ein Hilfsantrieb verwendet, der über ein zusätzliches Vorsehaltgetriebe mit dem Getriebe der windkraftanlage verbunden ist. Im Hinblick auf Platz, Gewicht und Kosten ist dies ungünstig. Insbesondere ist eine konstruktive Veränderung einer Gondel einer Windkraftanlage infolge eines erhöhten Platzbedarfs durch ein mit Hilfsantrieb und Vorschaltgetriebe augestattetes Getriebe äußerst aufwendig und teuer.

Der vorliegenden Erfindung liegt daher die Aufgabe zugrunde, ein warturige- bzw. inspektionsfreundliches Industriegetriebe zu schaffen, das eine platzsparende, gewichtsminimierte Konstruktion ermöglicht und sich kostengünstig herstellen läßt.

Diese Aufgabe wird erfindungsgemäß durch ein Windkraftanlagengetriebe mit den in Anspruch 1 angegebenen Merkmalen gelöst. vorteilhafte Weiterbildungen der vorliegenden Erfindung sind in den abhängigen Ansprüchen angegeben.

Das erfindungsgemäße Windkraftanlagengetriebe weist zumindest eine Getriebestufe auf, die zumindest ein erstes und ein zweites Zahnrad umfaßt. Außerdem ist ein axial mit dem ersten oder zweiten Zahnrad verbundenes und auf dieses zentriertes drittes Zahnrad vorgesehen. Zumindest das erste, zweite und dritte Zahnrad sind von einem Getriebegehäuse umfaßt. An das Getriebegehäuse ist ein Hilfsantrieb angeflanscht, dessen Drehmoment über ein axial entlang einer von einem Motor angetriebenen Antriebswelle verschiebbares und mit der Antriebswelle drehbares viertes Zahnrad auf das dritte Zahnrad übertragbar ist. Das dritte Zahnrad steht in einem zugeschalteten Zustand des Hilfsantriebs im Eingriff mit dem vierten Zahnrad. Durch einen erfindungsgemäßen Entfall eines Vorschaltgetriebes und eine daraus resultierende Reduktion einer Einzelteileanzahl ist eine kostengünstigere und kompaktere Realisierung eines Windkraftanlagengetriebes möglich.

Erfindungsgemäß, wird das vierte Zahnrad mittels eines Hebelmechanismus entlang der Antriebswelle des Hilfsantriebs verschoben. Der Hebelmechanismus umfaßt ferner einen Verstellhebel, der mittels eines einrastbaren Stellbolzens gegen unbeabsichtigte Betätigung gesichert ist, wodurch eine Gefahr von Fehlbedienungen reduziert wird. Zur Rückführung des Stellbolzens in eine axiale Ruheposition weist der Stellbolzen vorteilhafterweise einen Federmechanismus auf.

Entsprechend einer weiteren Ausführungsform der vorliegenden Erfindung ist der Verstellhebel mittels einer Rückholfeder in eine Ruheposition bewegbar, in der eine Drehmomentübertragung zwischen dem Hilfsantrieb und dem ersten oder zweiten Zahnrad der Planetenstufe unterbrochen ist. Auf diese weise wird das erste Zahnrad nach einer Benutzung des Hilfsantriebs automatisch in eine Ausgangsposition zurückgeholt, in der es nicht mehr im Eingriff mit dem zweiten Zahnrad steht. Ein automatisches Zurückholen des Verstellhebels bietet in Kombination mit dem obigen Federmechanismus umfassenden Stellbolzen hinsichtlich Arbeitssicherheit bei entsprechender Dimensionierung den Vorteil, daß 2 Bedienpersonen für einen Motoranlauf des Hilfsantriebs erforderlich sind. In diesem Fall betätigt eine erste Bedienperson den verstellhebel, und eine zweite Hedienperson betätigt einen räumlich entfernten Schalter für einen Motoranlauf.

Erfindungegemäß ist zur Erfassung eines Zuschaltens des Hilfsantriebs durch Betätigung des Verstellhebels ferner ein elektromagnetischer Endschalter vorgesehen, der durch den Verstellhebel schaltbar ist und mit einer windkraftanlagensteuerungseinheit verbunden ist. Auf diese Weise kann zur Vermeidung von Schäden verhindert werden, daß eine Windkraftanlageninbetriebnahme erfolgt, wenn das dritte und vierte Zahnrad für den Hilfsantrieb noch miteinander im Eingriff sind.

vorteilhafterweise ist der elektromechanische Endschalter über eine Umlenkscheibe, die eine radiale Aussparung zur Betätigung des elektromechanischen Endschalters aufweist, mit dem Verstellhebel verbunden. Dabei ist die Umlenkscheibe durch Betätigung des Verstellhebels drehbar. Bei entsprechender Bemessung der Umlenkscheibe weisen der elektromechanische Endschalter und der Verstellhebel in Kombination mit dem obigen Federmechanismus umfassenden Stellbolzen einen Abstand auf. Hierdurch führen Beschädigungen oder Manipulationen am Stellbolzen üblicherweise nicht zwangsläufig zu einer Unwirksamkeit von Maßnahmen zur Sicherung des Hilfsantriebs gegenüber unbeäbsichtigter Inbetriebnahme, wenn der Endschalter als redundante Sicherungevorrichtung noch funktionsfähig ist. Der Endschalter kann beispielsweise zur Erzeugung eines Abschaltsignals für die Windkraftanlagensteuerungweinheit ausgestaltet sein.

Entsprechend einer weiteren Ausgestaltung der vorliegenden Erfindung ist eine Bewegung des Verstellhebls über eine welle auf einen mit dem Verstellhebel starr gekoppelten Umlenkhebel übertragbar. Außerdem ist an einem freien Ende des Umlenkhebels ein das vierte Zahnrad umfassender Greifer angeordnet. Durch den Greifer ist das vierte Zahnrad axial entlang der Antriebswelle des Hilfsantriebs verschiebbar. Auf diese Weise kann ein mechanisch zuverlässiger Verachiebemechanismus für das vierte Zahnrad realisiert werden.

Vorzugsweise sind das erste und das zweite Zahnrad schrägverzahnt und das dritte und das vierte Zahnrad geradeverzahnt. Darüber hinaus kann das vierte Zahnrad an einer oder beiden Flanken Fasen oder Abrundungen aufweist, wodurch sich das vierte Zahnrad einfach axial verschieben und in Eingriff mit dem dritten zahnrad bringen läßt..

Entsprechend einer bevorzugten Ausgestaltung der vorliegenden Erfindung weist der Motor eine Motorwelle auf, die senkrecht zur Antriebswelle verläuft und mit dieser gekoppelt ist. Außerdem ist die Getriebestufe eine Planeten- oder stirnradgetriebestufe. Auf diese Weise ergibt sich eine besonders platzsparende Anordnung des Hilfsantriebs, welcher eine axiale Ausdehnung des windkraftanlagengetriebes nicht nachteilig erhöht. Vorzugsweise ist außerdem das dritte Zahnrad platzsparend axial zwischen dem ersten oder zweiten Zahnrad und einem generatormeitigen Getriebelager angeordnet, das vom Getriebegehäuse umfaßt ist.

Die Erfindung wird nachfolgend an einem Ausführungsbeispiel anhand der Zeichnung näher erläutert. Es zeigt
- Figur 1: eine perspektivische Darstellung eines Windkraftanlagengetriebes mit einem Hilfsantrieb,
- Figur: 2 eine perspektivische Darstellung von in einem Getriebegehäuse angeordneten Bauteilen des Windkraftanlagengetriebes gemäß Figur 1,
- Figur 3: eine Detaildarstellung eines Hebelmechanismus für ein zuschalten des Hilfsantriebs,
- Figur 4: eine Schnittdarstellung des Hebelmechanismus gemäß Figur 3.

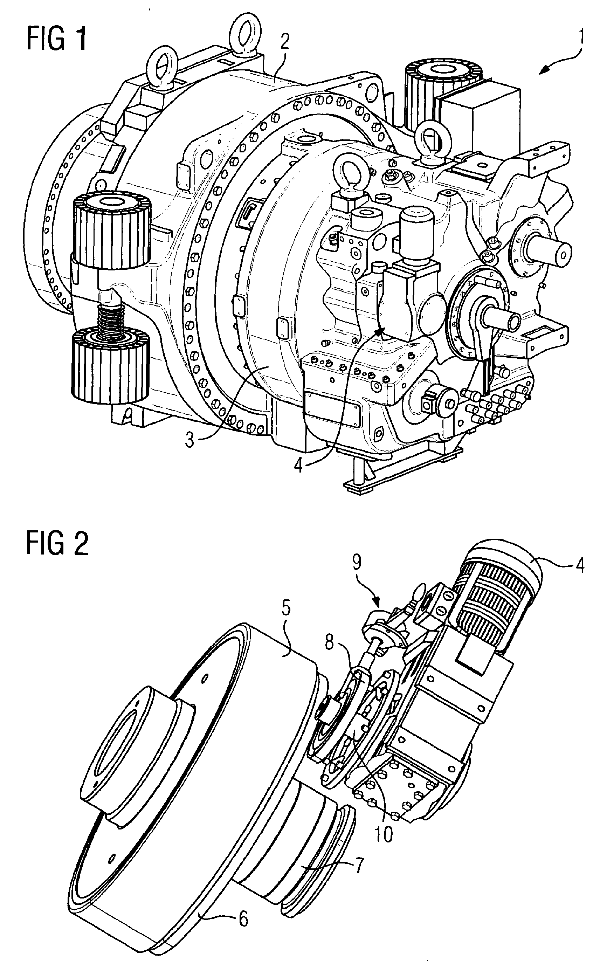

Das in Figur 1 dargestellte Windkraftanlagengetriebe 1 umfaßt eine rotorseitige Planetengetriebestufe 2 und eine generatorseitige Stirnradgetriebestufe 3. Die Stirnradgetriebestufe 3 umfaßt ein erstes antriebseitiges Zahnrad 5 und ein zweites abtriebseitiges Zahnrad. Entsprechend Figur 2 ist ein drittes Zahnrad 6 axial mit dem ersten Zahnrad 5 verbunden und auf dieses zentriert. Die Stirnradgetriebestufe weist ferner ein Getriebegehäuse auf, welches das erste 5, zweite und dritte Zahnrad 6,sowie ein generatorseitiges Getriebelager 7 umfaßt. Das dritte Zahnrad 6 ist axial zwischen dem ersten Zahnrad 5 und dem Getriebelager 7 angeordnet. Am Getriebegehäuse der Stirnradgetriebestufe 3 ist ein Hilfsantrieb 4 angeflanscht, dessen Drehmoment über ein axial entlang einer von einem Motor angetriebenen Antriebswelle 10 verschiebbares und mit der Antriebswelle 10 drehbares viertes Zahnrad 8 auf das dritte Zahnrad 6 übertragbar ist. Das vierte Zahnrad 8 ist mittels eines Hebelmechanismus 9 axial verschiebbar und steht in einem zugeschalteten Zustand des Hilfsantriebs 4 im Eingriff mit dem dritten Zahnrad 6. Stehen das dritte 6 und vierte Zahnrad 8 miteinander im Eingriff, so kann ein Antriebsstrang, der die Planetengetriebestufe 2 und die Stirnradgetriebestufe 3 umfaßt, zu Wartungs- oder Inspektionszwecken rotierend bewegt werden.

Die Anwendung der vorliegenden Erfindung ist nicht auf eine Ankopplung eines Hilfsantriebs an ein Stirnradgetriebe beschränkt. Beispielsweise kann das dritte Zahnrad 6 auch an ein Sonnenrad eines Planetengetriebes gekoppelt sein.

Das erste 5 und das zweite Zahnrad der Stirnradgetriebestufe 3 sind vorzugsweise schrägverzahnt, während das dritte 6 und vierte Zahnrad 8 geradeverzahnt sind, um beide Zahnräder bei einem axialen Verschieben des vierten Zahnrads 8 einfacher in Eingriff bringen zu können. Aus diesem Grund weist das vierte Zahnrad 8 außerdem an einer oder beiden Flanken Fasen oder Abrundungen auf. Da über das dritte 6 und vierte Zahnrad 8 im Vergleich zum ersten 5 und zweiten Zahnrad nur verhältnismäßig geringe Drehmomente übertragen werden, ist eine aufwendigere Schrägverzahnung für das dritte 6 und vierte Zahnrad 8 nicht erforderlich. Zudem müssen bei einer Geradeverzahnung keine axial wirkenden Kraftkomponenten kompensiert werden.

Der Motor des Hilfsantriebs 4 weist ferner eine Motorwelle auf, die senkrecht zur Antriebswelle 10 verläuft und mit dieser gekoppelt ist. Hierdurch kann der Hilfsantrieb 4 platzsparend quer zur Getriebeachse angeordnet werden, so daß der Hilfsantrieb 4 allenfalls eine unwesentliche, unkritische Erhöhung einer axialen Ausdehnung des Windkraftanlagengetriebes 1 bewirkt.

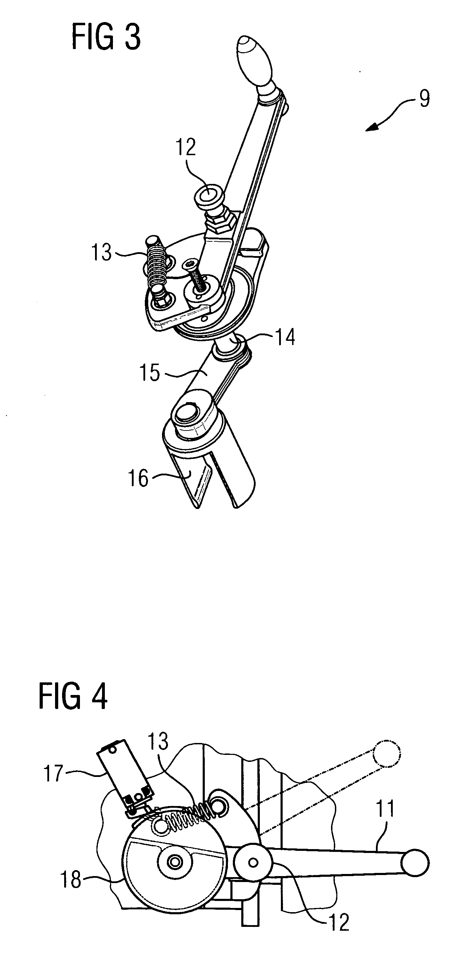

In Figur 3 ist im Detail erkennbar, daß der Hebelmechanismus 9 einen Verstellhebel 11 umfaßt, der mittels eines einrastbaren Stellbolzens 12 gegen unbeabsichtigte Betätigung gesichert ist. Der Stellbolzen 12 weist wiederum einen Federmechanismus zur Rückführung des Stellbolzens 12 in eine axiale Ruheposition auf. Auf diese Weise ist eine unbeabsichtigte Betätigung des Verstellhebels 11 ausgeschlossen, da dieser durch die Rückführung des Stellbolzens 12 gegenüber einem Verstellen arretiert ist.

Der Verstellhebel 11 ist mittels einer Rückholfeder 13 in eine Ruheposition bewegbar, in der eine Drehmomentübertragung zwischen dem Hilfsantrieb 4 und der Stirnradgetriebestufe 3 unterbrochen ist. Eine Bewegung des Verstellhebels 11 wird über eine Welle 14 auf einen mit dem Verstellhebel 11 starr gekoppelten Umlenkhebel 15 übertragen. An einem freien Ende des Umlenkhebels 15 ist ein das vierte Zahnrad 8 umfassender Greifer 16 befestigt. Durch den Greifer 16 wird das vierte Zahnrad 8 axial entlang der Antriebswelle 10 des Hilfsantriebs 4 verschoben. Durch einen radialen Formschluß zwischen der Antriebswelle 10 und dem vierten Zahnrad 8 erfolgt eine Übertragung einer Hilfsantriebsrotation auf das vierte Zahnrad 8.

Des weiteren ist zur Erfassung eines Zuschaltens des Hilfsantriebs 4 infolge einer Betätigung des Verstellhebels 11 ein in Figur 4 dargestellter elektromagnetischer Endschalter 17 vorgesehen. Der Endschalter 17 ist durch den Verstellhebel 11 schaltbar, so daß die Stellung des Verstellhebels 11 ermittelt werden kann. Außerdem ist der Endschalter 17 mit einer in den Figuren nicht explizit dargestellten Steuerungseinheit verbunden, durch die eine unzulässige Inbetriebnahme einer Windkraftanlage zur Vermeidung von Schäden durch einen zugeschalteten Hilfsantrieb blockiert werden kann.

Der elektromechanische Endschalter 17 ist über eine Umlenkscheibe 18, die an ihrem Umfang eine radiale Aussparung zur Betätigung des elektromechanischen Endschalters 17 aufweist, mit dem Verstellhebel 11 verbunden. Die Umlenkscheibe 18 ist durch Betätigung des Verstellhebels 11 drehbar. Durch die radiale Aussparung ist ein mit der Aussparung zusammenwirkendes Schaltelement des elektromechanischen Endschalters 17 auslenkbar, wodurch der elektromechanische Endschalter 17 geöffnet bzw. geschlossen wird.

Die Anwendung der vorliegenden Erfindung ist nicht auf das beschriebene Ausführungsbeispiel beschränkt.

## Patentansprüche

1. Windkraftanlagengetriebe mit
- zumindest einer Getriebestufe, die zumindest ein erstes (5) und ein zweites zahnrad umfaßt,
- einem axial mit dem ersten oder zweiten Zahnrad verbundenen und auf dieses zentrierten dritten Zahnrad (6),
- einem zumindest das erste, zweite und dritte Zahnrad umfassenden Getriebegehäuse,
- einem an das Getriebegehäuse angeflanschten Hilfsantrieb (4), dessen Drehmoment über ein mit einer Antriebswelle drehbares viertes Zahnrad (8) auf das dritte Zahnrad (6) übertragbar ist, das in einem zugeschalteten Zustand des Hilfsantriebs im Eingriff mit dem vierten Zahnrad steht,
**dadurch gekennzeichnet,**
- **daß** das vierte Zahnrad (8) axial entlang der von einem Motor angetriebenen Antriebswelle mittels eines Hebelmechanismus (9) verschiebbar ist,
- **daß** der Hebelmechanismus (9) einen Verstellhebel (11) umfaßt, der mittels eines einrastbaren Stellbolzens (12) gegen unbeabsichtigte Betätigung gesichert ist,
- **daß** zur Erfassung eines Zuschaltens des Hilfsantriebs (4) durch Betätigung des Verstellhebels (11) ein elektromagnetischer Endschalter (17) vorgesehen ist, der durch den Verstellhebel schaltbar ist und mit einer Windkraftanlagensteuerungseinheit verbunden ist.

2. windkraftanlagengetriebe nach Anspruch 1,
bei dem der stellbolzen (12) einen Federmechanismus zur Rückführung des Stellbolzens in eine axiale Ruheposition aufweist.

3. Windkraftanlagengetriebe nach einem der Ansprüche 1 oder 2,
bei dem der Verstallhebel (11) mittels einer Rückholfeder (13) in eine Ruheposition bewegbar ist, in der eine Drehmomentübertragung zwischen dem Hilfsantrieb und dem ersten oder zweiten Zahnrad unterbrochen ist.

4. Windkraftanlagengetriebe nach einem der Ansprüche 1 bis 3, bei dem der elektromechanische Endschalter (17) über eine Umlenkscheibe (18), die eine radiale Aussparung zur Betätigung des elektromechanischen Endschalters aufweist, mit dem Verstellhebel verbunden ist, wobei die Umlenkscheibe durch Betätigung des Verstellhebels drehbar ist.

5. Windkraftanlagengetriebe nach einem der Ansprüche 1 bis 4, bei dem der elektromechanische Endschalter (17) zur Erzeugung eines Abschaltsignals für die Windkraftanlagensteuerungseinheit ausgestaltet ist.

6. Windkraftanlagengetriebe nach einem der Ansprüche 1 bis 5, bei dem eine Bewegung des verstellhebels (11) über eine Welle auf einen mit dem Verstellhebel starr gekoppelten Umlenkhebel (15) übertragbar ist, und bei dem an einem freien Ende des Umlenkhebels ein das vierte Zahnrad umfassender Greifer (16) angeordnet ist, und bei dem das vierte Zahnrad durch den Greifer axial entlang der Antriebswelle des Hilfsantriebs verschiebbar ist.

7. Windkraftanlagengstriebe nach einem der Ansprüche 1 bis 6, bei dem das erste (5) und das zweite Zahnrad schrägverzahnt sind, und bei dem das dritte (6) und das vierte Zahnrad (8) geradeverzahnt sind, und bei dem das vierte Zahnrad an einer oder beiden Flanken Fasen oder Abrundungen aufweist.

8. Windkraftanlagengetriebe nach einem der Ansprüche 1 bis 7, bei dem der Motor (4) eine Motorwelle aufweist, die senkrecht zur Antriebswelle verläuft und mit dieser gekoppelt ist, und bei dem die Getriebestufe eine Planeten- oder Stirnradgetriebestufe ist.

9. Windkraftanlagengetriebe nach einem der Ansprüche 1 bis 8, bei dem das dritte Zahnrad (6) axial zwischen, dem ersten oder zweiten zahnrad und einem generatorseitigen Getriebelager angeordnet ist, das vom Getriebegehäuse umfaßt ist.

## Claims

1. Wind power plant transmission having
- at least one gear stage which comprises at least one first (5) and one second gearwheel,
- a third gearwheel (6) which is connected axially to the first or second gearwheel and is centred on the latter,
- a transmission housing which encloses at least the first, second and third gearwheels,
- an auxiliary drive (4) which is flange-connected to the transmission housing and the torque of which can be transmitted via a fourth gearwheel (8) which can be rotated with a drive shaft to the third gearwheel (6) which, in a switched-on state of the auxiliary drive, is in engagement with the fourth gearwheel,
**characterized**
- **in that** the fourth gearwheel (8) can be displaced axially by means of a lever mechanism (9) along the drive shaft which is driven by a motor,
- **in that** the lever mechanism (9) comprises an adjusting lever (11) which is secured against unintentional actuation by means of a latchable actuating pin (12), and
- **in that**, in order to detect switching on of the auxiliary drive (4) by actuation of the adjusting lever (11), an electromagnetic limit switch (17) is provided which can be switched by the adjusting lever and is connected to a wind power plant control unit.

2. Wind power plant transmission according to Claim 1, in which the actuating pin (12) has a spring mechanism for returning the actuating pin into an axial rest position.

3. Wind power plant transmission according to either of Claims 1 and 2, in which the adjusting lever (11) can be moved by means of a restoring spring (13) into a rest position, in which a torque transmission between the auxiliary drive and the first or second gearwheel is interrupted.

4. Wind power plant transmission according to one of Claims 1 to 3, in which the electromechanical limit switch (17) is connected to the adjusting lever via a deflection pulley (18) which has a radial cut-out for actuating the electromechanical limit switch, it being possible for the deflection pulley to be rotated by actuation of the adjusting lever.

5. Wind power plant transmission according to one of Claims 1 to 4, in which the electromechanical limit switch (17) is designed to generate a switch-off signal for the wind power plant control unit.

6. Wind power plant transmission according to one of Claims 1 to 5, in which a movement of the adjusting lever (11) can be transmitted via a shaft to a deflection lever (15) which is coupled rigidly to the adjusting lever, and in which a gripper (16) which comprises the fourth gearwheel is arranged at a free end of the deflection lever, and in which the fourth gearwheel can be displaced axially along the drive shaft of the auxiliary drive by the gripper.

7. Wind power plant transmission according to one of Claims 1 to 6, in which the first (5) and the second gearwheels have helical toothing, and in which the third (6) and the fourth (8) gearwheels have spur toothing, and in which the fourth gearwheel has bevels or rounded portions on one or both flanks.

8. Wind power plant transmission according to one of Claims 1 to 7, in which the motor (4) has a motor shaft which extends perpendicularly with respect to the drive shaft and is coupled to the latter, and in which the gear stage is a planetary or spur gear stage.

9. Wind power plant transmission according to one of Claims 1 to 8, in which the third gearwheel (6) is arranged axially between the first or second gearwheel and a generator-side transmission bearing which is enclosed by the transmission housing.

## Revendications

1. Engrenage d'éolienne comprenant
- au moins un étage d'engrenage, qui comprend au moins une première ( 5 ) et une deuxième roues dentées,
- une troisième roue ( 16 ) dentée reliée axialement à la première ou à la deuxième roue dentée et centrée sur celle-ci,
- un carter d'engrenage contenant au moins la première, deuxième et troisième roues dentées,
- un entraînement ( 4 ) auxiliaire bridé sur le carter d'engrenage et dont le couple de rotation peut être transmis à la troisième roue ( 16 ) dentée par une quatrième roue ( 8 ) dentée tournant avec un arbre d'entraînement, troisième roue qui, lorsque l'entraînement auxiliaire est branché, est en prise avec la quatrième roue dentée,
**caractérisé**
- **en ce que** la troisième roue ( 8 ) dentée peut coulisser axialement au moyen d'un mécanisme ( 9 ) à levier le long de l'arbre d'entraînement entraîné par un moteur,
- **en ce que** le mécanisme ( 9 ) à levier comprend un levier ( 11 ) de manoeuvre, qui, au moyen d'un axe ( 15 ) de réglage encliquetable, empêche un actionnement intempestif,
- **en ce que**, pour détecter que l'entraînement ( 4 ) auxiliaire est branché par actionnement du levier ( 11 ) de manoeuvre, il est prévu un interrupteur ( 17 ) électromagnétique de fin de course, qui peut être fermé par le levier de manoeuvre et qui est relié à une unité de commande de l'éolienne.

2. Engrenage d'éolienne suivant la revendication 1,
dans lequel l'axe ( 12 ) de réglage a un mécanisme à ressort, pour ramener l'axe de réglage dans une position axiale de repos.

3. Engrenage d'éolienne suivant l'une des revendications 1 ou 2, dans lequel le levier ( 11 ) de manoeuvre peut être mis, au moyen d'un ressort ( 13 ) de rappel, dans une position de repos, dans laquelle une transmission de couple de rotation entre l'entraînement auxiliaire et la première ou la deuxième roue dentée est interrompue.

4. Engrenage d'éolienne suivant l'une des revendications 1 à 3, dans lequel l'interrupteur ( 17 ) électromécanique de fin de course est relié au levier de manoeuvre par un disque ( 18 ) de renvoi, qui a un évidement radial pour l'actionnement de l'interrupteur électromécanique de fin de course, le disque de renvoi pouvant tourner par l'actionnement du levier de manoeuvre.

5. Engrenage d'éolienne suivant l'une des revendications 1 à 4, dans lequel l'interrupteur ( 17 ) électromécanique de fin de course est conçu pour la production d'un signal de mise hors circuit de l'unité de commande de l'éolienne.

6. Engrenage d'éolienne suivant l'une des revendications 1 à 5, dans lequel un déplacement du levier ( 11 ) de manoeuvre peut être transmis par un arbre à un levier ( 15 ) de renvoi, couplé rigidement au levier de manoeuvre, et dans lequel un organe ( 16 ) de préhension, comprenant la quatrième roue dentée, est monté à une extrémité libre du levier de renvoi et dans lequel la quatrième roue dentée peut coulisser par l'organe de préhension axialement le long de l'arbre de l'entraînement auxiliaire.

7. Engrenage d'éolienne suivant l'une des revendications 1 à 6, dans lequel la première ( 5 ) et la deuxième roues dentées sont à denture hélicoïdale et dans lequel la troisième ( 6 ) et la quatrième ( 8 ) roues dentées sont à denture droite et dans lequel la quatrième roue dentée a des biseaux ou des arrondis sur l'un des flancs ou sur les deux flancs.

8. Engrenage d'éolienne suivant l'une des revendications 1 à 7, dans lequel le moteur ( 4 ) a un arbre, qui s'étend perpendiculairement à l'arbre d'entraînement et qui lui est couplé, et dans lequel l'étage d'engrenage est un étage d'engrenage planétaire ou un étage d'engrenage droit.

9. Engrenage d'éolienne suivant l'une des revendications 1 à 8, dans lequel la troisième roue ( 6 ) dentée est disposée axialement entre la première ou la deuxième roue dentée et un palier d'engrenage du côté de la génératrice, qui est entouré du carter d'engrenage.
